(19) Europäisches Patentamt / European Patent Office / Office européen des brevets

(11) **EP 4 264 753 B1**

(12) **FASCICULE DE BREVET EUROPÉEN**

(45) Date de publication et mention de la délivrance du brevet:
**01.01.2025  Bulletin 2025/01**

(21) Numéro de dépôt: **21836153.3**

(22) Date de dépôt: **13.12.2021**

(51) Classification Internationale des Brevets (IPC):
**H01S 3/06** *(2006.01)*    **H01S 3/23** *(2006.01)*
**H01S 3/00** *(2006.01)*    **H01S 3/042** *(2006.01)*

(52) Classification Coopérative des Brevets (CPC):
**H01S 3/0604; H01S 3/0615; H01S 3/2316;**
H01S 3/0064; H01S 3/042; H01S 3/0623;
H01S 3/2333

(86) Numéro de dépôt international:
**PCT/EP2021/085521**

(87) Numéro de publication internationale:
**WO 2022/128931 (23.06.2022 Gazette 2022/25)**

(54) **DISPOSITIF D'AMPLIFICATION D'UN FAISCEAU LASER**

VORRICHTUNG ZUR VERSTÄRKUNG EINES LASERSTRAHLS

LASER BEAM AMPLIFICATION DEVICE

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **17.12.2020  FR 2013478**

(43) Date de publication de la demande:
**25.10.2023  Bulletin 2023/43**

(73) Titulaire: **THALES**
**92400 Courbevoie (FR)**

(72) Inventeurs:
• **LAUX, Sébastien**
**78995 Elancourt Cedex (FR)**
• **PELLEGRINA, Alain**
**78995 Elancourt Cedex (FR)**
• **RICAUD, Sandrine**
**78995 Elancourt Cedex (FR)**
• **CASAGRANDE, Olivier**
**78995 Elancourt Cedex (FR)**
• **CHARBONNEAU, Mathilde**
**78995 Elancourt Cedex (FR)**

(74) Mandataire: **Lavoix**
**2, place d'Estienne d'Orves**
**75441 Paris Cedex 09 (FR)**

(56) Documents cités:
EP-A1- 2 475 054    EP-A2- 2 915 226
EP-A2- 2 915 226    EP-B1- 2 915 226
FR-A1- 2 997 572

• MENDE J ET AL: "Concept of neutral gain modules for power scaling of thin-disk lasers", APPLIED PHYSICS B ; LASERS AND OPTICS, SPRINGER, BERLIN, DE, vol. 97, no. 2, 12 September 2009 (2009-09-12), pages 307 - 315, XP019758912, ISSN: 1432-0649, DOI: 10.1007/S00340-009-3726-2

**Description**

La présente invention concerne un dispositif d'amplification d'un faisceau laser multi-longueurs d'onde.

Le domaine de l'invention est celui des sources laser à état solide pour applications scientifiques, industrielles, médicales et militaires. Plus spécifiquement, elle est utilisée de façon avantageuse pour des matériaux de milieu amplificateur (tel qu'un cristal) qui ont une relativement faible épaisseur comparée à leur ouverture selon l'axe de propagation du faisceau laser, typiquement inférieure à 1:3.

La technologie des lasers de pompage a sensiblement évolué ces dernières années et il devient désormais possible de disposer d'une source laser impulsionnelle qui donne une puissance moyenne de pompage d'au moins la centaine de Watt.

Cependant, un certain nombre de configurations ne sont pas compatibles avec les lasers de pompage de nouvelle génération pour lesquelles une haute énergie et une forte puissance moyenne (plus haut taux de répétition) sont recherchées.

Dans l'état de l'art actuel, différentes solutions sont utilisées pour l'extraction de la puissance thermique dans un milieu amplificateur en travaillant sur le facteur de forme de ce milieu, typiquement des fibres amplificatrices, des disques très minces, des slab et des disques dit épais.

La solution de disque épais est bien adaptée à certains milieux amplificateurs tels que les matériaux amorphes (comme les verres), les céramiques transparentes ou les cristaux comme le Ti:Sa (abréviation pour Titane:Saphir). Elle permet à la fois d'accéder à des niveaux d'énergie élevés, des puissances moyennes élevées, et à des durées d'impulsions courtes grâce au large spectre d'amplification du matériau.

Dans la technologie de disque épais, le milieu amplificateur est refroidi par sa face arrière. Le refroidissement est alors obtenu au moyen d'un fluide, liquide ou gaz, ou d'un solide. Un tel refroidissement par la face arrière permet d'augmenter la surface d'échange thermique. Il permet par ailleurs de générer un gradient thermique dans la direction de propagation du laser dans le milieu amplificateur, et également d'atteindre une extraction thermique élevée. Les variations d'indice liées aux variations de température dans le milieu amplificateur sont alors des gradients majoritairement orientés dans la même direction que la direction de propagation du faisceau laser.

Toutefois, les dispositifs d'amplification laser à refroidissement par la face arrière induisent un repliement géométrique du faisceau du fait de la face arrière réfléchissante du milieu amplificateur (par exemple un cristal). La face de sortie du milieu amplificateur est alors la même que la face d'entrée, ce qui implique que les impulsions parasites (dues aux réflexions parasites sur la face avant) se retrouvent avant l'impulsion principale, dégradant par conséquent le contraste temporel de l'impulsion. Le contraste temporel est défini par le rapport entre l'intensité de l'impulsion principale et le pied de l'impulsion et/ou des éventuelles impulsions parasites.

Pour éviter cette dégradation, il est connu du brevet EP 2 915 226 B, de modifier l'interface air/cristal pour séparer l'impulsion principale et les impulsions parasites. Pour cela, la face avant du milieu amplificateur est inclinée par rapport à sa face arrière d'un angle non nul. Ainsi, après propagation dans le milieu amplificateur, les réflexions parasites sont séparées spatialement de l'impulsion principale et le contraste temporel n'est plus dégradé par les réflexions parasites.

Pour les impulsions courtes (avec spectre large), cet angle produit un effet prismatique qui est compensé par un prisme de compensation positionné sur le trajet du faisceau, comme cela est décrit dans EP 2 915 226 B. Ainsi, lorsque plusieurs passages dans le milieu d'amplification sont effectués, cela implique la mise en oeuvre de plusieurs prismes dans le système d'amplification.

Au-delà de l'impact financier, la mise en oeuvre de nombreuses optiques en transmission est une source de perte optiques et une source potentielle de panne (endommagement conduisant à l'indisponibilité du laser et à un coût de réparation de la pièce et de la main d'oeuvre pour le réalignement).

Le document EP 2 475 054 A décrit un autre exemple de dispositif d'amplification d'un faisceau laser.

Il existe donc un besoin pour un dispositif d'amplification permettant de minimiser les pertes optiques tout en restant satisfaisant en termes de refroidissement et de contraste temporel.

A cet effet l'invention a pour objet un dispositif d'amplification d'un faisceau laser multi-longueurs d'onde, le dispositif comprenant :

a. un premier milieu amplificateur solide ayant un premier indice de réfraction, le premier milieu amplificateur ayant au moins deux faces planes parmi une face avant propre à recevoir le faisceau à amplifier, dit faisceau incident, et une face arrière réfléchissante, la face avant étant inclinée par rapport à la face arrière d'une première inclinaison non nulle, la face arrière (étant propre à être refroidie, et

b. un deuxième milieu amplificateur solide ayant un deuxième indice de réfraction, le deuxième milieu amplificateur ayant au moins deux faces planes parmi une face avant propre à recevoir le faisceau réfléchi par la face arrière et réfracté par la face avant du premier milieu amplificateur, et une face arrière réfléchissante, la face avant étant inclinée par rapport à la face arrière d'une deuxième inclinaison non nulle, la face arrière étant propre à être refroidie, le deuxième milieu amplificateur étant disposé sur le trajet du faisceau réfléchi par la face arrière et réfracté par la face avant du premier milieu amplificateur, la première inclinaison, la deuxième inclinaison et l'orientation du deuxième milieu amplificateur étant telles que les sous-faisceaux de chaque longueur d'onde, formant le faisceau de sortie du deuxième milieu amplificateur, soient parallèles entre eux en sortie du deuxième milieu amplificateur.

Selon d'autres aspects avantageux de l'invention, le dispositif comprend une ou plusieurs des caractéristiques suivantes, prises isolément ou suivant toutes les combinaisons techniquement possibles :

- la face avant du premier milieu amplificateur est perpendiculaire à un axe Oz, la première inclinaison formant un angle $\beta_1'$ sur un plan xOz et $\beta_1''$ sur un plan yOz, la deuxième inclinaison formant un angle $\beta_2'$ sur un plan xOz et $\beta_2''$ sur un plan yOz, la condition suivante étant vérifiée :

$$\beta_1' = \frac{((n_2-1).\beta_2')}{n_1-1} \text{ et } \beta_1'' = \frac{((n_2-1).\beta_2'')}{n_1-1}.$$

- le deuxième milieu amplificateur est disposé par rapport au premier milieu amplificateur de sorte que :

   a. la face avant du deuxième milieu amplificateur est parallèle à la face avant du premier milieu amplificateur, et
   b. la face arrière du deuxième milieu amplificateur est parallèle à la face arrière du premier milieu amplificateur ;

- le faisceau en sortie du deuxième milieu amplificateur présente un diamètre élargi (par rapport au diamètre du faisceau incident, le dispositif d'amplification comprenant un ensemble optique de compensation propre à compenser l'élargissement du faisceau en sortie du deuxième milieu amplificateur de sorte que le faisceau en sortie du dispositif d'amplification ait un diamètre sensiblement égal au diamètre du faisceau incident ;
- l'ensemble optique de compensation comprend :

   a. un troisième milieu amplificateur solide ayant un troisième indice de réfraction, le troisième milieu amplificateur ayant au moins deux faces planes parmi une face avant propre à recevoir le faisceau en sortie du deuxième milieu amplificateur et une face arrière réfléchissante, la face avant (étant inclinée par rapport à la face arrière d'une troisième inclinaison non nulle, la face arrière étant propre à être refroidie,
   b. un quatrième milieu amplificateur solide ayant un quatrième indice de réfraction, le quatrième milieu amplificateur ayant au moins deux faces planes parmi une face avant propre à recevoir le faisceau réfléchi par la face arrière et réfracté par la face avant du troisième milieu amplificateur, et une face arrière réfléchissante, la face avant étant inclinée par rapport à la face arrière d'une quatrième inclinaison non nulle, la face arrière étant propre à être refroidie, le quatrième milieu amplificateur étant disposé sur le trajet du faisceau réfléchi par la face arrière et réfracté par la face avant du troisième milieu amplificateur,

la troisième inclinaison, la quatrième inclinaison, l'orientation du troisième milieu amplificateur et l'orientation du quatrième milieu amplificateur étant telles que le faisceau de sortie du quatrième milieu amplificateur ait un diamètre sensiblement égal au diamètre du faisceau incident et que les sous-faisceaux de chaque longueur d'onde, formant ledit faisceau de sortie, soient parallèles entre eux en sortie du quatrième milieu amplificateur ;
- la face avant du troisième milieu amplificateur est perpendiculaire à un axe Oz, la troisième inclinaison formant un angle $\beta_3'$ sur un plan xOz et $\beta_3''$ sur un plan yOz, la troisième inclinaison formant un angle $\beta_3'$ sur un plan xOz et $\beta_3''$ sur un plan yOz, la condition suivante étant vérifiée :

$$\beta_3' = \frac{((n_4-1).\beta_4')}{n_3-1} \text{ et } \beta_3'' = \frac{((n_4-1).\beta_4'')}{n_3-1}.$$

- le troisième milieu amplificateur est disposé par rapport au quatrième milieu amplificateur de sorte que :

   a. la face avant du troisième milieu amplificateur est parallèle à la face avant du quatrième milieu amplificateur, et
   b. la face arrière du troisième milieu amplificateur est parallèle à la face arrière du quatrième milieu amplificateur ;

- le premier milieu amplificateur, le deuxième milieu amplificateur, le troisième milieu amplificateur et le quatrième milieu amplificateur sont identiques ;
- le premier milieu, le deuxième milieu, le troisième milieu et le quatrième milieu forment une unité d'amplification, dite de référence, le faisceau réfléchi par la face arrière et réfracté par la face avant du quatrième milieu formant le faisceau de sortie de l'unité d'amplification de référence, le dispositif d'amplification comprenant une ou plusieurs unités d'amplifications successives, identiques à l'unité d'amplification de référence, chaque unité d'amplification étant disposée de sorte à recevoir, en tant que faisceau d'entrée, le faisceau en sortie de l'unité d'amplification précédente ;
- l'ensemble optique de compensation comprend au moins un miroir disposé de sorte que le faisceau de sortie du dispositif d'amplification soit superposé au faisceau incident ;
- la face avant du premier milieu amplificateur est propre à recevoir le faisceau incident et à réfléchir un faisceau, dit premier faisceau parasite, à partir du faisceau incident, le deuxième milieu amplificateur étant disposé en dehors du trajet du premier faisceau parasite.
- la face avant du deuxième milieu amplificateur est propre à recevoir le faisceau en sortie du premier milieu amplificateur et à réfléchir un faisceau, dit deuxième faisceau parasite, à partir du faisceau reçu, le troisième milieu amplificateur étant disposé en dehors du trajet du deuxième faisceau parasite, et
- la face avant du troisième milieu amplificateur est propre à recevoir le faisceau en sortie du deuxième milieu amplificateur et à réfléchir un faisceau, dit troisième faisceau parasite, à partir du faisceau reçu, le quatrième milieu amplificateur étant disposé en dehors du trajet du troisième faisceau parasite.

D'autres caractéristiques et avantages de l'invention apparaîtront à la lecture de la description qui suit de modes de réalisation de l'invention, donnée à titre d'exemple uniquement, et en référence aux dessins qui sont :

- [Fig 1] figure 1, une représentation schématique vue de dessus d'un dispositif d'amplification selon un premier mode de réalisation,
- [Fig 2] figure 2, une représentation schématique vue de dessus d'un dispositif d'amplification selon un exemple de mise en oeuvre d'un deuxième mode de réalisation,
- [Fig 3] figure 3, une représentation schématique vue de dessus d'un dispositif d'amplification selon un autre exemple de mise en oeuvre d'un deuxième mode de réalisation, et
- [Fig 4] figure 4, une représentation schématique vue de dessus d'un dispositif d'amplification selon un troisième mode de réalisation.

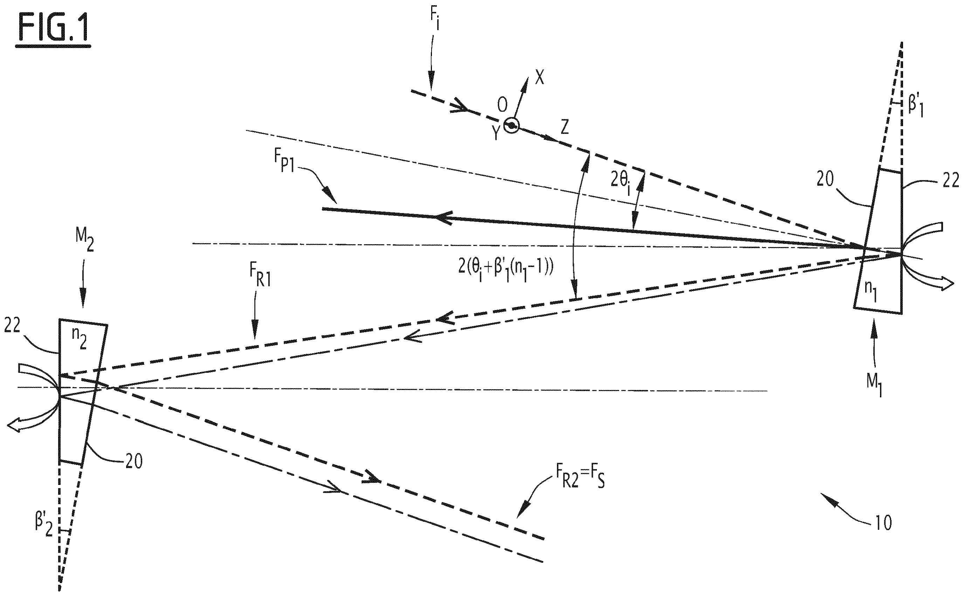

Dans la suite de la description, il est défini une direction de propagation z représentée sur les figures par un axe z et correspondant à la direction de propagation du faisceau laser. Il est, en outre, défini une première direction transversale, perpendiculaire à la direction de propagation, et représentée sur les figures par un axe x, tel que le plan (xOz) correspond à une vue de dessus du dispositif d'amplification 10. Il est, également, défini une deuxième direction transversale y, perpendiculaire à la direction de propagation z et à la première direction transversale x. La deuxième direction transversale y est représentée sur les figures par un axe y et est telle que le plan (yOz) correspond à une vue de côté du dispositif d'amplification 10.
Dans la suite de la description, il est entendu par le terme « dispersion spatiale chromatique », la dispersion angulaire d'un faisceau due aux variations de l'angle de déviation en fonction des longueurs d'onde dans un dioptre. Il est entendu par le terme « dispersion latérale chromatique », l'élargissement du diamètre d'un faisceau en fonction des longueurs d'onde (décalage des pupilles) suite au passage dans deux dioptres dont les interfaces sont parallèles (lames à faces parallèles).
Un premier mode de réalisation d'un dispositif d'amplification 10 est illustré par la figure 1.
Le dispositif d'amplification 10 est configuré pour amplifier un faisceau laser, notamment un faisceau laser impulsionnel multi-longueurs d'onde. Le faisceau à amplifier est, par exemple, un faisceau infrarouge.
Le faisceau à amplifier a, par exemple, une puissance moyenne supérieure à 10 Watts (W).
Le dispositif d'amplification 10 selon le premier mode de réalisation comprend au moins un premier milieu amplificateur M1 et au moins un deuxième milieu amplificateur M2.
Le premier milieu M1 est un milieu solide. Le premier milieu M1 est, par exemple, un cristal tel que du saphir dopé au Titane, ou Yb :YAG, Yb :CaF2 ou un polymère, une céramique ou un verre ou tout autre matériau à l'état solide.
Le premier milieu M1 a un premier indice de réfraction n1.
De préférence, la relation suivante est vérifiée :

$$n1 \gg \frac{(n1-1)}{v1}$$

Où v1 est la constringence du premier milieu amplificateur M1. Cela vise à préserver le caractère multi-longueurs d'onde du faisceau $F_S$ en sortie du dispositif d'amplification 10.

Le premier milieu M1 a au moins deux faces planes parmi une face avant 20 propre à recevoir le faisceau à amplifier, dit faisceau incident $F_I$, et une face arrière 22 réfléchissante.

La face avant 20 est inclinée par rapport à la face arrière 22 d'une inclinaison $\beta_1$ (angle) non nulle. Le premier milieu M1 a, ainsi, une forme de disque dont les faces avant et arrière sont inscrites dans un prisme à base trapézoïdale (figure 1) ou triangulaire. Dans ce qui suit, $\beta_1'$ désigne la projection de l'inclinaison $\beta_1$ sur le plan (xOz) et $\beta_1''$ la projection de l'inclinaison $\beta_1$ sur le plan (yOz).

Dans l'exemple particulier de la figure 1, l'angle $\beta_1'$ est égal à l'inclinaison $\beta_1$ et l'angle $\beta_1''$ est nul. La base du premier milieu M1 est, ainsi, contenue dans un plan parallèle au plan (xOz). Comme cela sera décrit dans ce qui suit, cela permet d'éjecter les impulsions parasites dans le plan (xOz). Une telle configuration est toutefois donnée à titre d'exemple, les angles $\beta'_1$ et $\beta_1''$ pouvant aussi être tous deux non nuls.

La face avant 20 du premier milieu M1 est propre à recevoir le faisceau incident $F_I$ et à, d'une part, réfléchir un faisceau parasite, dit premier faisceau parasite $F_{P1}$ et, d'autre part, à réfracter un faisceau, dit premier faisceau utile $F_{R1}$ après qu'un tel faisceau ait été réfléchi par la face arrière 22.

Avantageusement, la face avant 20 est traitée anti-reflet.

La face arrière 22 du premier milieu M1 est propre à réfléchir le faisceau incident $F_I$, après son passage par la face avant 20 du premier milieu M1, pour former le premier faisceau utile $F_{R1}$.

La face arrière 22 est propre à être refroidie par un dispositif de refroidissement, qui est, par exemple, compris dans le dispositif d'amplification 10. Le refroidissement est représenté sur la figure 1 par une flèche accolée à la face arrière 22.

Le deuxième milieu amplificateur M2 est un milieu solide. Le deuxième milieu M2 est, par exemple, un cristal tel que du saphir dopé au Titane, ou Yb :YAG, Yb :CaF2 ou un polymère, une céramique ou un verre ou tout autre matériau à l'état solide.

Le deuxième milieu M2 a un deuxième indice de réfraction n2.

De préférence, la relation suivante est vérifiée :

$$n2 \gg \frac{(n2-1)}{v2}$$

Où v2 est la constringence du deuxième milieu amplificateur M2. Cela vise à préserver le caractère multi-longueurs d'onde du faisceau $F_S$ en sortie du dispositif d'amplification 10.

Le deuxième milieu M2 a au moins deux faces planes parmi une face avant 20 propre à recevoir le faisceau à amplifier, dit faisceau incident $F_I$, et une face arrière 22 réfléchissante.

La face avant 20 du deuxième milieu M2 est inclinée par rapport à la face arrière 22 d'une inclinaison $\beta_2$ (angle) non nulle. Le deuxième milieu M2 a, ainsi, une forme de disque dont les faces avant et arrière sont inscrites dans un prisme à base trapézoïdale (figure 1) ou triangulaire. Dans ce qui suit, $\beta_2'$ désigne la projection de l'inclinaison $\beta_2$ sur le plan (xOz) et $\beta_2''$ la projection de l'inclinaison $\beta_2$ sur le plan (yOz).

Dans l'exemple particulier de la figure 1, l'angle $\beta_2'$ est égal à l'inclinaison $\beta_2$ et l'angle $\beta_2''$ est nul. La base du deuxième milieu M2 est, ainsi, contenue dans un plan parallèle au plan (xOz). Comme cela sera décrit dans ce qui suit, cela permet d'éjecter les impulsions parasites dans le plan (xOz). Une telle configuration est toutefois donnée à titre d'exemple, les angles $\beta'_2$ et $\beta_2''$ pouvant aussi être tous deux non nuis.

Dans un exemple préféré de mise en oeuvre, le deuxième milieu M2 est identique au premier milieu M1. Ainsi, n1 = n2 et $\beta_1 = \beta_2$. Avantageusement, le premier milieu M1 et le deuxième milieu M2 ont été fabriqués au cours du même processus de fabrication.

Avantageusement, la face avant 20 est traitée anti-reflet.

La face arrière 22 est propre à être refroidie par un dispositif de refroidissement, qui est, par exemple, compris dans le dispositif d'amplification 10. Le refroidissement est représenté sur la figure 1 par une flèche accolée à la face arrière 22.

Le deuxième milieu amplificateur M2 est disposé par rapport au premier milieu M1 de sorte à être sur le trajet du premier faisceau utile $F_{R1}$. Un tel premier faisceau utile $F_{R1}$ est, ainsi, reçu sur la face avant 20 du deuxième milieu M2. Ainsi, la face avant 20 du deuxième milieu M2 est propre à, d'une part, réfléchir un faisceau parasite, dit deuxième faisceau parasite $F_{P2}$ (non représenté sur la figure 1 pour ne pas surcharger la figure) et, d'autre part, à réfracter un faisceau utile, dit deuxième faisceau utile $F_{R2}$, après qu'un tel faisceau ait été réfléchi par la face arrière 22 du deuxième milieu M2.

La première inclinaison $\beta_1$, la deuxième inclinaison $\beta_2$ et l'orientation du deuxième milieu amplificateur M2 sont choisies de sorte que les sous-faisceaux de chaque longueur d'onde, formant le deuxième faisceau utile $F_{R2}$ de sortie du deuxième milieu amplificateur M2, soient parallèles entre eux en sortie du deuxième milieu amplificateur M2. Sur la figure 1, seuls deux sous-faisceaux sont représentés pour ne pas surcharger la figure. Le deuxième milieu M2 permet, ainsi, de compenser la dispersion spatiale chromatique induite par l'effet prismatique résultant de l'inclinaison $\beta_1$ entre la face avant 20 et la face arrière 22 du premier milieu M1.

Avantageusement, la condition suivante est vérifiée :

$$\beta_1' = \frac{((n_2-1).\beta_2')}{n_1-1} \text{ et } \beta_1'' = \frac{((n_2-1).\beta_2'')}{n_1-1}$$

Avantageusement, le deuxième milieu amplificateur M2 est disposé par rapport au premier milieu amplificateur M1 de sorte que :

- la face avant 20 du deuxième milieu amplificateur M2 est parallèle à la face avant 20 du premier milieu amplificateur M1, et
- la face arrière 22 du deuxième milieu amplificateur M2 est parallèle à la face arrière 22 du premier milieu amplificateur M1.

Ainsi, si les deux milieux M1 et M2 étaient accolés sans modifier leurs orientations respectives, on obtiendrait un dioptre à faces parallèles.

Avantageusement, le deuxième milieu amplificateur M2 est disposé en dehors du trajet du premier faisceau parasite $F_{P1}$.

De préférence, le deuxième milieu M2 est disposé à une distance L du premier milieu M1 de sorte que les faisceaux amplifiés (faisceau de sortie $F_S=F_{R2}$ sur la figure 1), parasites $F_{P1}$ et incidents $F_I$ soient spatialement séparés. Cette séparation est obtenue pour L telle que :

$$L > \frac{\Phi}{(\tan(2(\theta_i + \beta_1'.n_1))} \text{ ou } L > \frac{\Phi}{(\tan(2(\varphi_i + \beta_1''.n_1))}$$

Où :

- $\Phi$ est le diamètre du faisceau incident $F_I$,
- $\theta_i$ est l'angle d'incidence dans le plan (xOz) du faisceau incident sur la face avant 20 du premier milieu M1,
- $\varphi_i$ est l'angle d'incidence dans le plan (yOz) du faisceau incident sur la face avant 20 du premier milieu M1,
- $\beta_1'$ est l'angle résultant de la projection de l'inclinaison $\beta_1$ dans le plan (xOz),
- $\beta_1''$ est l'angle résultant de la projection de l'inclinaison $\beta_1$ dans le plan (yOz), et
- $n_1$ est l'indice optique du premier milieu M1.

Le fonctionnement du dispositif d'amplification 10 selon le premier mode de réalisation va maintenant être décrit.

Initialement, le faisceau (l'impulsion) à amplifier $F_I$ de diamètre $\Phi$ arrive sur la face avant 20 du premier milieu amplificateur M1 avec un angle d'incidence $\theta_i$ dans le plan (xOz) et un angle d'incidence $\varphi_i$ dans le plan (yOz).

Le faisceau utile est réfléchi par la face arrière 22, le faisceau parasite $F_{P1}$ par la face avant 20. Le faisceau parasite aussi désigné impulsions parasites, est défléchi sur cette face avant 20 d'un angle $2\theta_i$ dans le plan (xOz) et $2\varphi_i$ dans le plan (yOz). Le faisceau amplifié $F_{R1}$ dans le milieu amplificateur M1 aussi désigné impulsion principale, est défléchi en sortie d'un angle $2(\theta_i + \beta_1'.(n1-1))$ dans le plan (xOz) et d'un angle $2(\varphi_i + \beta_1''.(n1-1))$ dans le plan (yOz).

Comme il s'agit d'une source laser multi-longueurs d'onde, l'angle $\beta_1'$ que forment les faces 20 et 22 dans le plan (xOz) et l'angle $\beta_1''$ que forment les faces 20 et 22 dans le plan (yOz), produisent un effet prismatique. Ainsi, après passage dans le premier milieu amplificateur M1, les longueurs d'onde du faisceau $F_{R1}$ réfracté par la face avant 20 et réfléchi par la face arrière 22 du premier milieu M1 (faisceau utile) sont séparées angulairement.

Le deuxième milieu M2 disposé après la séparation du faisceau utile $F_{R1}$ et du faisceau parasite $F_{P1}$, sur le trajet du faisceau utile $F_{R1}$ permet de corriger cette dispersion spatiale chromatique en fonction des longueurs d'onde.

En particulier, dans l'exemple particulier de la figure 1, $\varphi_i = 0$, $\beta_1' = \beta_2' = \beta$ et $\beta_1'' = \beta_2'' = 0$, ce qui fait que toute la propagation se passe dans le plan (xOz).

Il est à noter qu'en sortie du deuxième milieu amplificateur M2, les composantes spectrales du faisceau amplifié $F_{R2}$ forment une tache de diamètre $\Phi_+ \Delta\Phi$. On notera que $\Delta\Phi$ inclut l'augmentation du diamètre introduite par la divergence du faisceau lors de la double traversée du premier milieu amplificateur M1, puis celle introduite par la divergence du faisceau sur le trajet entre la face de sortie (face avant 20) du premier milieu M1 et le deuxième milieu M2. On retrouve

le même diamètre $\Phi_+ \Delta\Phi$ en sortie du deuxième milieu amplificateur M2. Pour préserver le caractère multi-longueurs d'onde du faisceau de sortie, l'élargissement $\Delta\Phi$ du diamètre du faisceau amplifié $F_{R2}$ doit être petit devant $\Phi$. Cela est

le cas lorsque $n_1 \gg \dfrac{n1-1}{v_1}$ .

En effet,

$$\Delta\Phi = L.\tan(2.\beta_1.\Delta n1) = L.\tan\left(2.\beta_1.\frac{1}{v_1}.(n1-1)\right)$$

or, $(2(\theta_i + \beta_1.n_1)) \gg 2.\beta_1.\dfrac{1}{v_1}.(n1-1)$ lorsque $n_1 \gg \dfrac{n1-1}{v_1}$, ce qui implique que $\Delta\Phi \ll \Phi$.

Ainsi, le dispositif d'amplification 10 selon le premier mode de réalisation permet de compenser la dispersion spatiale chromatique induite par l'inclinaison du premier milieu amplificateur M1 sans toutefois introduire de pertes additionnelles. La compensation est, en effet, réalisée par un autre milieu amplificateur qui n'introduit pas de pertes, mais au contraire plus de gain qu'un unique disque épais.

Le dispositif d'amplification 10 selon le premier mode de réalisation permet donc de minimiser les pertes optiques tout en restant satisfaisant en termes de refroidissement et de contraste temporel.

Un tel dispositif d'amplification 10 permet, en outre, de partager le gain dans plusieurs disques, ce qui présente des avantages pour la charge thermique par disque et pour le lasage transverse.

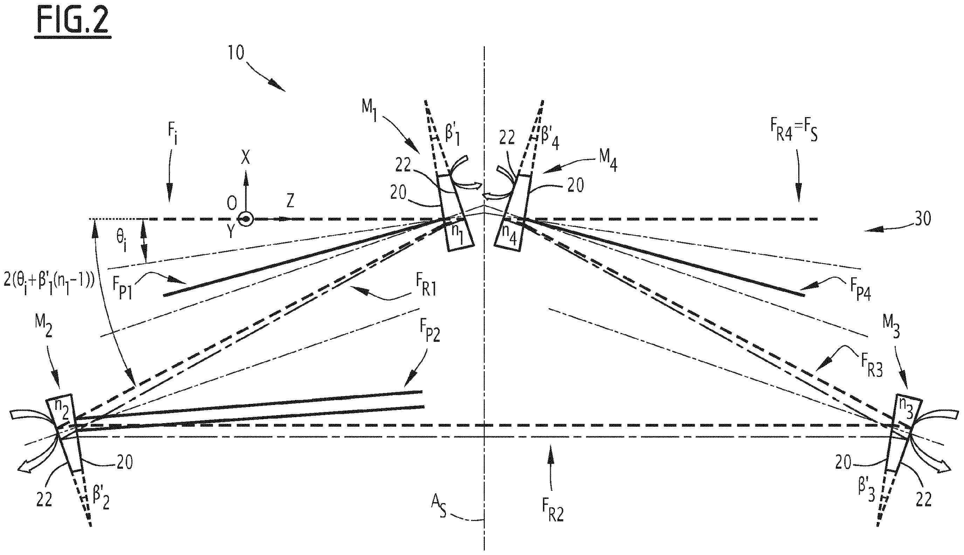

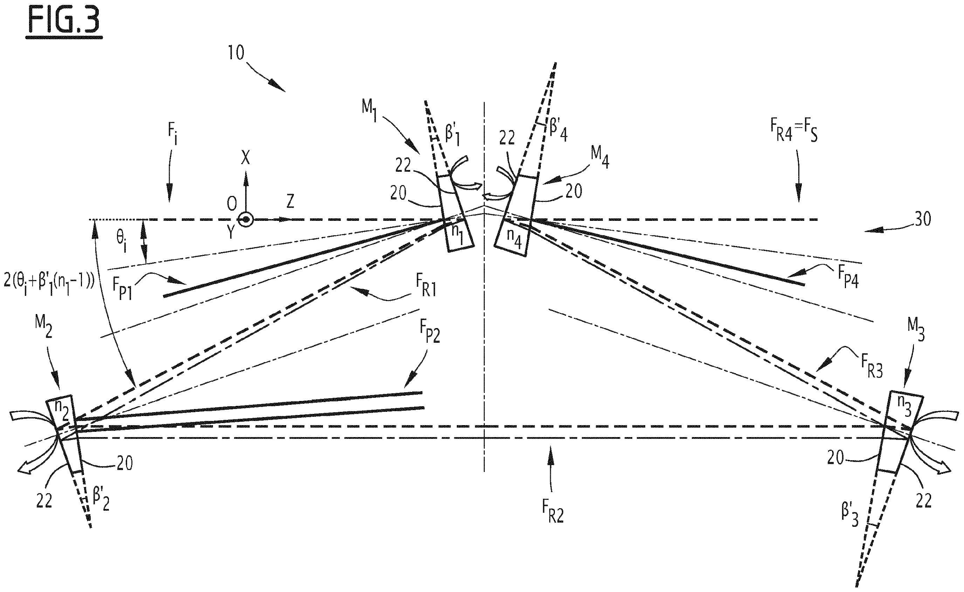

Selon un deuxième mode de réalisation tel que visible sur les figures 2 et 3, les éléments identiques au dispositif d'amplification 10 selon le premier mode de réalisation décrit en regard de la figure 1, ne sont pas répétés. Seules les différences sont mises en évidence.

Dans le deuxième mode de réalisation, outre les éléments du premier dispositif d'amplification 10, le dispositif d'amplification 10 comprend un ensemble optique de compensation 30 propre à compenser l'élargissement $\Delta\Phi$ du faisceau $F_{R2}$ en sortie du deuxième milieu amplificateur M2 (faisceau réfléchi par la face arrière 22 et réfracté par la face avant 20) de sorte que le faisceau $F_S$ en sortie du dispositif d'amplification 10 ait un diamètre sensiblement égal au diamètre $\Phi$ du faisceau incident $F_I$. Le dispositif de compensation 30 est, ainsi, propre à compenser la dispersion latérale chromatique.

Comme illustré sur les figures 2 et 3, l'ensemble optique de compensation 30 comprend un troisième milieu amplificateur M3 et un quatrième milieu amplificateur M4.

Le troisième milieu M3 est un milieu solide. Le troisième milieu M3 est, par exemple, un cristal tel que du saphir dopé au Titane, ou Yb :YAG, Yb :CaF2 ou un polymère, une céramique ou un verre ou tout autre matériau à l'état solide.

Le troisième milieu M3 a un troisième indice de réfraction n3.

De préférence, la relation suivante est vérifiée :

$$n3 \gg \frac{(n3-1)}{v3}$$

Où v3 est la constringence du troisième milieu amplificateur M3. Cela vise à préserver le caractère multi-longueurs d'onde du faisceau $F_S$ en sortie du dispositif d'amplification 10.

Le troisième milieu M3 a au moins deux faces planes parmi une face avant 20 propre à recevoir le deuxième faisceau utile $F_{R2}$ en sortie du deuxième milieu amplificateur M2, et une face arrière 22 réfléchissante.

La face avant 20 du troisième milieu M3 est inclinée par rapport à la face arrière 22 du troisième milieu M3 d'une inclinaison $\beta_3$ non nulle. Le troisième milieu M3 a, ainsi, une forme de disque dont les faces avant et arrière sont inscrites dans un prisme à base trapézoïdale (figures 2 et 3) ou triangulaire. Dans ce qui suit, $\beta_3'$ désigne la projection de l'inclinaison $\beta_3$ sur le plan (xOz) et $\beta_3''$ la projection de l'inclinaison $\beta_3$ sur le plan (yOz).

Dans l'exemple particulier des figures 2 et 3, l'angle $\beta_3'$ est égal à l'inclinaison $\beta_3$ et l'angle $\beta_3''$ est nul. La base du troisième milieu M3 est, ainsi, contenue dans un plan parallèle au plan (xOz). Comme cela sera décrit dans ce qui suit, cela permet d'éjecter les impulsions parasites dans le plan (xOz). Une telle configuration est toutefois donnée à titre d'exemple, les angles $\beta_3'$ et $\beta_3''$ pouvant aussi être tous deux non nuls.

Avantageusement, la condition suivante est vérifiée :

$$\beta_2' = \frac{((n_3-1).\beta_3')}{n_2-1} \text{ et } \beta_2'' = \frac{((n_3-1).\beta_3'')}{n_2-1}$$

Dans un exemple préféré de mise en oeuvre, le troisième milieu M3 est identique au deuxième milieu M2 et au premier milieu M1. Ainsi, n1 = n2 = n3 et $\beta_1 = \beta_2 = \beta_3$. Avantageusement, le premier milieu M1, le deuxième milieu M2 et le troisième milieu M3 ont été fabriqués au cours du même processus de fabrication.

La face avant 20 du troisième milieu M3 est propre à recevoir le faisceau $F_{R2}$ en sortie du deuxième milieu amplificateur M2 et à, d'une part, réfléchir un faisceau parasite, dit troisième faisceau parasite $F_{P3}$ (non représenté sur les figures 2 et 3 pour ne pas surcharger les figures) et, d'autre part, à réfracter un faisceau, dit troisième faisceau utile $F_{R3}$, après qu'un tel faisceau ait été réfléchi par la face arrière 22 du troisième milieu M3.

La face arrière 22 du troisième milieu M3 est propre à réfléchir le faisceau $F_{R2}$ en sortie du deuxième milieu amplificateur M2, après son passage par la face avant 20 du troisième milieu M3, pour former le faisceau utile $F_{R3}$.

La face arrière 22 du troisième milieu M3 est propre à être refroidie par un dispositif de refroidissement, qui est, par exemple, compris dans le dispositif d'amplification 10. Le refroidissement est représenté sur les figures 2 et 3 par une flèche accolée à la face arrière 22 du troisième milieu M3.

Avantageusement, la face avant 20 troisième milieu M3 est traitée anti-reflet.

Le quatrième milieu amplificateur M4 est un milieu solide. Le quatrième milieu M4 est, par exemple, un cristal tel que du saphir dopé au Titane, ou Yb :YAG, Yb :CaF2 ou un polymère, une céramique ou un verre ou tout autre matériau à l'état solide.

Le quatrième milieu M4 a un quatrième indice de réfraction n4.

De préférence, la relation suivante est vérifiée :

$$n4 \gg \frac{(n4-1)}{v4}$$

Où v4 est la constringence du quatrième milieu amplificateur M4. Cela vise à préserver le caractère multi-longueurs d'onde du faisceau $F_S$ en sortie du dispositif d'amplification 10.

Le quatrième milieu M4 a au moins deux faces planes parmi une face avant 20 propre à recevoir le faisceau à amplifier, dit faisceau incident $F_I$, et une face arrière 22 réfléchissante.

La face avant 20 du quatrième milieu M4 est inclinée par rapport à la face arrière 22 d'une quatrième inclinaison $\beta_4$ (angle) non nulle. Le quatrième milieu M4 a, ainsi, une forme de disque dont les faces avant et arrière sont inscrites dans un prisme à base trapézoïdale (figures 2 et 3) ou triangulaire. Dans ce qui suit, $\beta_4'$ désigne la projection de l'inclinaison $\beta_4$ sur le plan (xOz) et $\beta_4''$ la projection de l'inclinaison $\beta_4$ sur le plan (yOz).

Dans l'exemple particulier des figures 2 et 3, l'angle $\beta_4'$ est égal à l'inclinaison $\beta_4$ et l'angle $\beta_4''$ est nul. La base du quatrième milieu M4 est, ainsi, contenue dans un plan parallèle au plan (xOz). Comme cela sera décrit dans ce qui suit, cela permet d'éjecter les impulsions parasites dans le plan (xOz). Une telle configuration est toutefois donnée à titre d'exemple, les angles $\beta_4'$ et $\beta_4''$ pouvant aussi être tous deux non nuls.

Dans un exemple préféré de mise en oeuvre, le quatrième milieu M4 est identique au troisième milieu M3. Ainsi, n3 = n4 et $\beta_3 = \beta_4$. Avantageusement, le troisième milieu M3 et le quatrième milieu M4 ont été fabriqués au cours du même processus de fabrication.

Avantageusement, la face avant 20 est traitée anti-reflet.

La face arrière 22 est propre à être refroidie par un dispositif de refroidissement, qui est, par exemple, compris dans le dispositif d'amplification 10. Le refroidissement est représenté sur les figures 2 et 3 par une flèche accolée à la face arrière 22.

Le quatrième milieu amplificateur M4 est disposé sur le trajet du faisceau $F_{R3}$ réfléchi par la face arrière 22 et réfracté par la face avant 20 du troisième milieu amplificateur M3. Un tel faisceau $F_{R3}$ est, ainsi, reçu par la face avant 20 du quatrième milieu M4. Ainsi, la face avant 20 du quatrième milieu M4 est propre à, d'une part, réfléchir un faisceau parasite, dit quatrième faisceau parasite $F_{P4}$ et, d'autre part, à réfracter un faisceau utile $F_{R4}$ après qu'un tel faisceau ait été réfléchi par la face arrière 22 du quatrième milieu M4.

La troisième inclinaison $\beta_3$, la quatrième inclinaison $\beta_4$, l'orientation du troisième milieu amplificateur M3 et l'orientation du quatrième milieu amplificateur M4 sont choisies de sorte que le faisceau $F_{R4}$ de sortie du quatrième milieu amplificateur M4 (correspondant au faisceau $F_S$ de sortie du dispositif d'amplification 10 sur les figures 2 et 3) ait un diamètre sensiblement égal au diamètre $\Phi$ du faisceau incident $F_I$ et que les sous-faisceaux de chaque longueur d'onde, formant ledit faisceau de sortie $F_{R4}$, soient parallèles entre eux en sortie du quatrième milieu amplificateur M4. Ainsi, le troisième milieu M3 et le quatrième milieu M4 permettent de compenser la dispersion latérale chromatique du faisceau.

Avantageusement, la condition suivante est vérifiée :

$$\beta_3' = \frac{((n_4-1).\beta_4')}{n_3-1} \text{ et } \beta_3'' = \frac{((n_4-1).\beta_4'')}{n_3-1}$$

Avantageusement, le quatrième milieu amplificateur M4 est disposé par rapport au troisième milieu amplificateur M3 de sorte que :

- la face avant 20 du troisième milieu amplificateur M3 est parallèle à la face avant 20 du quatrième milieu amplificateur M4, et
- la face arrière 22 du troisième milieu amplificateur M3 est parallèle à la face arrière 22 du quatrième milieu amplificateur M4.

Ainsi, si les deux milieux M3 et M4 étaient accolés sans modifier leurs orientations respectives, on obtiendrait un dioptre à faces parallèles.

Avantageusement, le troisième milieu amplificateur M3 est disposé en dehors du trajet du deuxième faisceau parasite $F_{P2}$.

Avantageusement, le quatrième milieu amplificateur M4 est disposé en dehors du trajet du troisième faisceau parasite $F_{P3}$.

De préférence, le premier milieu M1, le deuxième milieu M2, le troisième milieu M3 et le quatrième milieu M4 sont identiques (mêmes matériaux, mêmes angles), et ont par exemple été fabriqués au cours du même cycle ou processus de fabrication. Ce cas particulier est illustré sur la figure 2. Dans ce cas particulier, il existe un axe de symétrie As entre le premier et le deuxième milieu, d'une part, et le troisième et le quatrième milieu, d'autre part. Le quatrième milieu M4 est, ainsi, le symétrique du premier milieu M1 par l'axe de symétrie As; et le troisième milieu M3 est le symétrique du deuxième milieu M2 par l'axe de symétrie As.

La figure 3 illustre un autre exemple de mise en oeuvre du deuxième mode de réalisation dans lequel le premier milieu M1 et le deuxième milieu M2 sont identiques et le troisième milieu M3 et le quatrième milieu M4 sont identiques, mais différents du premier milieu M1 et du deuxième milieu M2. Dans ce cas, il n'existe pas d'axe de symétrie entre le premier et le deuxième milieu, d'une part, et le troisième et le quatrième milieu, d'autre part.

Lors du fonctionnement du dispositif d'amplification 10 selon le deuxième mode de réalisation, outre le fonctionnement décrit pour le premier mode de réalisation, le faisceau utile $F_{R2}$ en sortie du deuxième milieu M2 est reçu sur la face avant 20 du troisième milieu M3, ce qui donne une troisième réflexion parasite $F_{P3}$ et un troisième faisceau utile $F_{R3}$ (réfléchi sur la face arrière 22 et réfracté sur la face avant 20 du troisième milieu M3). Le troisième faisceau utile $F_{R3}$ est reçu sur la face avant 20 du quatrième milieu M4, ce qui donne une quatrième réflexion parasite $F_{P4}$ et un quatrième faisceau utile $F_{R4}$ (réfléchi sur la face arrière 22 et réfracté sur la face avant 20 du quatrième milieu M4). Il sera noté que sur les figures 2 et 3, par soucis de clarté, les réflexions parasites $F_{P3}$ n'ont pas été représentées.

La configuration du troisième milieu M3 et du quatrième milieu M4 par rapport au premier milieu M1 et au deuxième milieu M2 permet, ainsi, de compenser la dispersion latérale chromatique du faisceau amplifié de sortie du dispositif d'amplification 10.

Ainsi, le dispositif d'amplification 10 selon le deuxième mode de réalisation permet, outre les avantages du premier mode de réalisation, de compenser la dispersion latérale chromatique induite par la divergence du faisceau lors de la traversée du premier milieu M1, et cela sans introduire de pertes additionnelles. Au contraire, la compensation est réalisée par d'autres milieux amplificateurs qui introduisent un gain d'amplification.

L'homme du métier comprendra que les figures 2 et 3 illustrent seulement quatre milieux amplificateurs, toutefois les avantages du deuxième mode de réalisation se généralisent à un nombre plus grand de milieux amplificateurs successifs avec pour condition que ce nombre soit un multiple de quatre (un multiple de deux mais pas de quatre reviendrait seulement à compenser la dispersion spatiale chromatique mais pas la dispersion latérale chromatique ).

Ainsi, le deuxième mode de réalisation se généralise de la manière suivante. Le premier milieu M1, le deuxième milieu M2, le troisième milieu M3 et le quatrième milieu M4 forment une unité d'amplification, dite de référence. Le faisceau $F_{R4}$ réfléchi par la face arrière 22 et réfracté par la face avant 20 du quatrième milieu M4 forme le faisceau $F_S$ de sortie de l'unité d'amplification de référence. Le dispositif d'amplification 10 comprend une ou plusieurs unités d'amplifications successives, identiques à l'unité d'amplification de référence, chaque unité d'amplification étant disposé de sorte à recevoir, en tant que faisceau d'entrée, le faisceau en sortie de l'unité d'amplification précédente.

Ainsi, le nombre d'unités d'amplification (donc de milieux d'amplification) est ajustable en fonction du niveau d'amplification souhaité.

D'autres compléments sont aussi envisageables pour le deuxième mode de réalisation. Par exemple, un afocal est propre à être inséré sur le trajet du faisceau lumineux entre le deuxième milieu M2 et le troisième milieu M3 pour augmenter la taille du faisceau entre le deuxième milieu M2 et le troisième milieu M3. Cela permet d'optimiser le rendement de l'amplification.

Egalement, dans une variante de mise en oeuvre, une chicane est propre à être inséré sur le trajet du faisceau lumineux entre le deuxième milieu M2 et le troisième milieu M3. La chicane est par exemple formée de deux miroirs plans inclinés à 45° l'un de l'autre. Cela permet de mettre en oeuvre une disposition géométrique différente des milieux amplificateurs (« en ligne »).

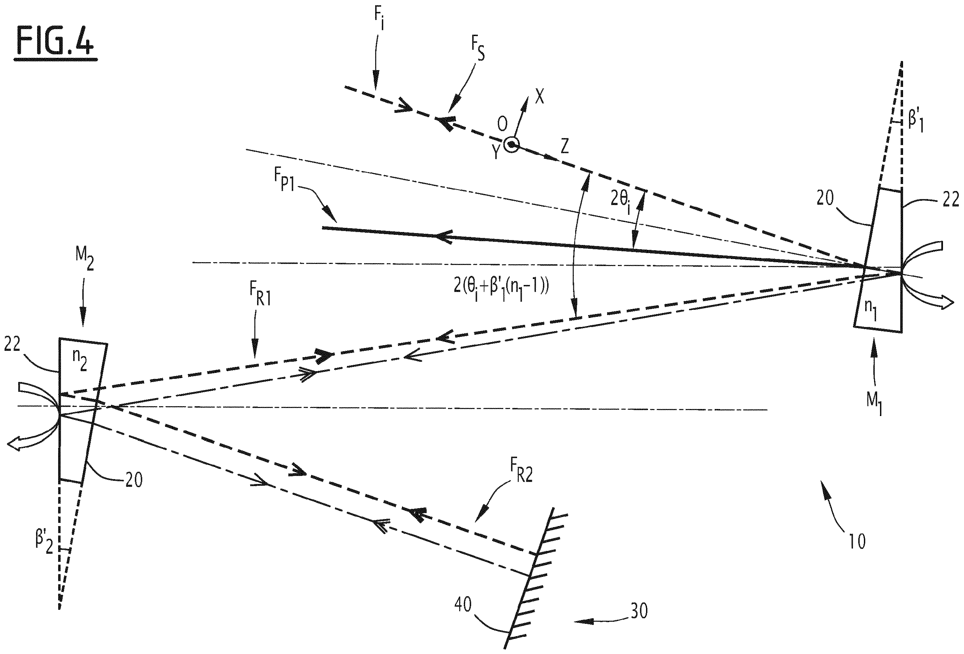

Selon un troisième mode de réalisation tel que visible sur la figure 4, les éléments identiques au dispositif d'amplification 10 selon le premier mode de réalisation décrit en regard de la figure 1 ne sont pas répétés. Seules les différences sont mises en évidence.

Dans le troisième mode de réalisation, outre les éléments du premier dispositif d'amplification 10, le dispositif d'amplification 10 comprend un ensemble optique de compensation 30 propre à compenser l'élargissement $\Delta\Phi$ du faisceau $F_{R2}$ en sortie du deuxième milieu amplificateur M2 (faisceau réfléchi par la face arrière 22 et réfracté par la face avant 20) de sorte que le faisceau $F_S$ en sortie du dispositif d'amplification 10 ait un diamètre sensiblement égal au diamètre $\Phi$ du faisceau incident $F_I$.

Comme illustré sur la figure 4, l'ensemble optique de compensation 30 comprend au moins un miroir 40 (miroir plan) disposé de sorte que le faisceau $F_S$ de sortie du dispositif d'amplification 10 soit superposé au faisceau incident $F_I$.

Ainsi, le miroir 40 est disposé de sorte que le faisceau $F_{R2}$ en sortie du dernier milieu, en l'occurrence le deuxième milieu M2, effectue un trajet retour superposé au trajet aller en repassant par les milieux amplificateurs.

Selon le principe de retour inverse de la lumière, cela permet de compenser la dispersion latérale chromatique dans le faisceau $F_S$ en sortie du dispositif d'amplification 10.

Lors du fonctionnement du dispositif d'amplification 10 selon le troisième mode de réalisation, outre le fonctionnement décrit pour le premier mode de réalisation, le faisceau laser effectue un retour inverse de sorte qu'il ressort par le premier milieu M1 superposé au faisceau incident $F_I$.

Ainsi, le dispositif d'amplification 10 selon le troisième mode de réalisation permet, outre les avantages du premier mode de réalisation, de compenser la dispersion latérale chromatique induite par la divergence du faisceau lors de la traversée du premier milieu M1, et cela sans introduire de pertes additionnelles. Au contraire, la compensation est accompagnée d'une amplification additionnelle puisque le faisceau laser repasse par le premier milieu M1 et le deuxième milieu M2.

L'homme du métier comprendra que les modes de réalisation décrits précédemment sont susceptibles d'être combinés entre eux lorsqu'une telle combinaison est compatible.

En particulier, le deuxième et le troisième mode de réalisation sont tout à fait compatibles, et ce quel que soit le nombre d'unités d'amplification.

En outre, l'homme du métier comprendra que le premier et le troisième mode de réalisation se généralisent à un nombre plus grand de milieux amplificateurs successifs, à condition que ce nombre soit un multiple de deux. Pour le premier mode de réalisation, lorsque ce nombre est un multiple de quatre, cela revient au deuxième mode de réalisation, et lorsque ce nombre est un multiple de deux mais pas de quatre, seuls les avantages du premier mode de réalisation sont obtenus. Pour le troisième mode de réalisation, les avantages du troisième mode de réalisation sont obtenus quel que soit le nombre de milieux amplificateurs successifs, à condition que ce nombre soit un multiple de deux.

Enfin, il sera également compris que les figures 1 à 4 sont données à titre d'exemples avec un angle pour les milieux amplificateurs induisant que la base de chaque milieu amplificateur soit dans un plan parallèle au plan de propagation du faisceau laser (plan (xOz)). Néanmoins, cet angle est susceptible de prendre d'autres valeurs, et en particulier d'avoir une projection non nulle dans chacun des plans (xOz) et (yOz).

## Revendications

1. Dispositif (10) d'amplification d'un faisceau laser multi-longueurs d'onde, le dispositif (10) comprenant :

   a. un premier milieu amplificateur (M1) solide ayant un premier indice de réfraction (n1), le premier milieu amplificateur (M1) ayant au moins deux faces planes parmi une face avant (20) propre à recevoir le faisceau à amplifier, dit faisceau incident ($F_I$), et une face arrière (22) réfléchissante, la face avant (20) étant inclinée par rapport à la face arrière (22) d'une première inclinaison ($\beta_1$) non nulle, la face arrière (22) étant propre à être refroidie, et

   b. un deuxième milieu amplificateur (M2) solide ayant un deuxième indice de réfraction (n2), le deuxième milieu amplificateur (M2) ayant au moins deux faces planes parmi une face avant (20) propre à recevoir le faisceau ($F_{R1}$) réfléchi par la face arrière (22) et réfracté par la face avant (20) du premier milieu amplificateur (M1), et une face arrière (22) réfléchissante, la face avant (20) étant inclinée par rapport à la face arrière (22) d'une deuxième inclinaison ($\beta_2$) non nulle, la face arrière (22) étant propre à être refroidie, le deuxième milieu amplificateur (M2) étant disposé sur le trajet du faisceau ($F_{R1}$) réfléchi par la face arrière (22) et réfracté par la face avant (20) du premier milieu amplificateur (M1),

**caractérisé en ce que** la première inclinaison ($\beta_1$), la deuxième inclinaison ($\beta_2$) et l'orientation du deuxième milieu amplificateur (M2) sont telles que les sous-faisceaux de chaque longueur d'onde, formant le faisceau de sortie ($F_{R2}$) du deuxième milieu amplificateur (M2), soient parallèles entre eux en sortie du deuxième milieu amplificateur (M2).

2. Dispositif d'amplification (10) selon la revendication 1, dans lequel la face avant (20) du premier milieu amplificateur (M1) est perpendiculaire à un axe Oz, la première inclinaison ($\beta_1$) formant un angle $\beta_1$' sur un plan xOz et $\beta_1$" sur un plan yOz, la deuxième inclinaison ($\beta_2$) formant un angle $\beta_2$' sur un plan xOz et $\beta_2$" sur un plan yOz, la condition suivante étant vérifiée :

$$\beta_1' = \frac{((n_2-1).\beta_2')}{n_1-1} \text{ et } \beta_1'' = \frac{((n_2-1).\beta_2'')}{n_1-1}.$$

3. Dispositif d'amplification (10) selon la revendication 1 ou 2, dans lequel le deuxième milieu amplificateur (M2) est disposé par rapport au premier milieu amplificateur (M1) de sorte que :

   a. la face avant (20) du deuxième milieu amplificateur (M2) est parallèle à la face avant (20) du premier milieu amplificateur (M1), et
   b. la face arrière (22) du deuxième milieu amplificateur (M2) est parallèle à la face arrière (22) du premier milieu amplificateur (M1).

4. Dispositif d'amplification (10) selon l'une quelconque des revendications 1 à 3, dans lequel le faisceau ($F_{R2}$) en sortie du deuxième milieu amplificateur (M2) présente un diamètre élargi ($\Phi + \Delta\Phi$) par rapport au diamètre ($\Phi$) du faisceau incident ($F_I$), le dispositif d'amplification (10) comprenant un ensemble optique de compensation (30) propre à compenser l'élargissement ($\Delta\Phi$) du faisceau ($F_{R2}$) en sortie du deuxième milieu amplificateur (M2) de sorte que le faisceau ($F_S$) en sortie du dispositif d'amplification (10) ait un diamètre sensiblement égal au diamètre ($\Phi$) du faisceau incident ($F_I$).

5. Dispositif d'amplification (10) selon la revendication 4, dans lequel l'ensemble optique de compensation (30) comprend :

   a. un troisième milieu amplificateur (M3) solide ayant un troisième indice de réfraction (n3), le troisième milieu amplificateur (M3) ayant au moins deux faces planes parmi une face avant (20) propre à recevoir le faisceau ($F_{R2}$) en sortie du deuxième milieu amplificateur (M2) et une face arrière (22) réfléchissante, la face avant (20) étant inclinée par rapport à la face arrière (22) d'une troisième inclinaison ($\beta_3$) non nulle, la face arrière (22) étant propre à être refroidie,
   b. un quatrième milieu amplificateur (M4) solide ayant un quatrième indice de réfraction (n4), le quatrième milieu amplificateur (M4) ayant au moins deux faces planes parmi une face avant (20) propre à recevoir le faisceau ($F_{R3}$) réfléchi par la face arrière (22) et réfracté par la face avant (20) du troisième milieu amplificateur (M3), et une face arrière (22) réfléchissante, la face avant (20) étant inclinée par rapport à la face arrière (22) d'une quatrième inclinaison ($\beta_4$) non nulle, la face arrière (22) étant propre à être refroidie, le quatrième milieu amplificateur (M4) étant disposé sur le trajet du faisceau ($F_{R3}$) réfléchi par la face arrière (22) et réfracté par la face avant (20) du troisième milieu amplificateur (M3),

   la troisième inclinaison ($\beta_3$), la quatrième inclinaison ($\beta_4$), l'orientation du troisième milieu amplificateur (M3) et l'orientation du quatrième milieu amplificateur (M4) étant telles que le faisceau de sortie ($F_S$) du quatrième milieu amplificateur (M4) ait un diamètre sensiblement égal au diamètre ($\Phi$) du faisceau incident ($F_I$) et que les sous-faisceaux de chaque longueur d'onde, formant ledit faisceau de sortie ($F_s$), soient parallèles entre eux en sortie du quatrième milieu amplificateur (M4).

6. Dispositif d'amplification (10) selon la revendication 5, dans lequel la face avant (20) du troisième milieu amplificateur (M3) est perpendiculaire à un axe Oz, la troisième inclinaison ($\beta_3$) formant un angle $\beta_3$' sur un plan xOz et $\beta_3$" sur un plan yOz, la troisième inclinaison ($\beta_3$) formant un angle $\beta_3$' sur un plan xOz et $\beta_3$" sur un plan yOz, la condition suivante étant vérifiée :

$$\beta_3{}' = \frac{((n_4-1).\beta_4{}')}{n_3-1} \text{ et } \beta_3{}'' = \frac{((n_4-1).\beta_4{}'')}{n_3-1}.$$

**7.** Dispositif d'amplification (10) selon la revendication 5 ou 6, dans lequel le troisième milieu amplificateur (M3) est disposé par rapport au quatrième milieu amplificateur (M4) de sorte que :

    a. la face avant (20) du troisième milieu amplificateur (M3) est parallèle à la face avant (20) du quatrième milieu amplificateur (M4), et
    b. la face arrière (22) du troisième milieu amplificateur (M3) est parallèle à la face arrière (22) du quatrième milieu amplificateur (M4).

**8.** Dispositif d'amplification (10) selon l'une quelconque des revendications 5 à 7, dans lequel le premier milieu amplificateur (M1), le deuxième milieu amplificateur (M2), le troisième milieu amplificateur (M3) et le quatrième milieu amplificateur (M4) sont identiques.

**9.** Dispositif d'amplification (10) selon l'une quelconque des revendications 5 à 8, dans lequel le premier milieu (M1), le deuxième milieu (M2), le troisième milieu (M3) et le quatrième milieu (M4) forment une unité d'amplification, dite de référence, le faisceau ($F_{R4}$) réfléchi par la face arrière (22) et réfracté par la face avant (20) du quatrième milieu (M4) formant le faisceau de sortie ($F_S$) de l'unité d'amplification de référence, le dispositif d'amplification (10) comprenant une ou plusieurs unités d'amplifications successives, identiques à l'unité d'amplification de référence, chaque unité d'amplification étant disposée de sorte à recevoir, en tant que faisceau d'entrée, le faisceau en sortie de l'unité d'amplification précédente.

**10.** Dispositif d'amplification (10) selon l'une quelconque des revendications 4 à 9, dans lequel l'ensemble optique de compensation (30) comprend au moins un miroir disposé de sorte que le faisceau de sortie ($F_S$) du dispositif d'amplification (10) soit superposé au faisceau incident ($F_I$).

**Patentansprüche**

**1.** Vorrichtung (10) zum Verstärken eines Laserstrahls mehrerer Wellenlängen, die Vorrichtung (10) umfassend:

    a. ein erstes festes Verstärkermedium (M1), das einen ersten Brechungsindex (n1) aufweist, wobei das erste Verstärkermedium (M1) mindestens zwei ebene Flächen aufweist, darunter eine Vorderseite (20), die geeignet ist, um den zu verstärkenden Strahl, den sogenannten einfallenden Strahl ($F_I$), zu empfangen, und eine reflektierende Rückseite (22), wobei die Vorderseite (20) in Bezug auf die Rückseite (22) um eine erste Neigung ($\beta_1$) ungleich Null geneigt ist, wobei die Rückseite (22) geeignet ist, um gekühlt zu werden, und
    b. ein zweites festes Verstärkermedium (M2), das einen zweiten Brechungsindex (n2) aufweist, wobei das zweite Verstärkermedium (M2) mindestens zwei ebene Flächen aufweist, darunter eine Vorderseite (20), die geeignet ist, um den Strahl ($F_{R1}$) zu empfangen, der von der Rückseite (22) reflektiert und von der Vorderseite (20) des ersten Verstärkermediums (M1) gebrochen wird, und eine reflektierende Rückseite (22), wobei die Vorderseite (20) in Bezug auf die Rückseite (22) um eine zweite Neigung ($\beta_2$) ungleich Null geneigt ist, wobei die Rückseite (22) geeignet ist, um gekühlt zu werden, wobei das zweite Verstärkermedium (M2) im Verlauf des Strahls ($F_{R1}$) angeordnet ist, der von der Rückseite (22) reflektiert und von der Vorderseite (20) des ersten Verstärkermediums (M1) gebrochen wird,

**dadurch gekennzeichnet, dass** die erste Neigung ($\beta_1$),

die zweite Neigung ($\beta_2$) und die Ausrichtung des zweiten Verstärkermediums (M2) derart sind,
dass die Teilstrahlen jeder
Wellenlänge, die den Ausgangsstrahl ($F_{R2}$) des zweiten Verstärkermediums (M2) bilden, an dem Ausgang des zweiten Verstärkermediums (M2) parallel zueinander sind.

**2.** Verstärkervorrichtung (10) nach Anspruch 1, wobei die Vorderseite (20) des ersten Verstärkermediums (M1) senkrecht zu einer Achse Oz ist, wobei die erste Neigung ($\beta_1$) einen Winkel $\beta_1{}'$ auf einer Ebene xOz und $\beta_1{}''$ auf einer Ebene yOz bildet, die zweite Neigung ($\beta_2$) einen Winkel $\beta_2{}'$ auf einer xOz-Ebene und $\beta_2{}''$ auf einer yOz-Ebene bildet, wobei die folgende Bedingung erfüllt ist:

$$\beta_1{}' = \frac{((n_2-1).\beta_2{}')}{n_1-1} \text{ et } \beta_1{}'' = \frac{((n_2-1).\beta_2{}'')}{n_1-1}.$$

3. Verstärkervorrichtung (10) nach Anspruch 1 oder 2, wobei das zweite Verstärkermedium (M2) in Bezug auf das erste Verstärkermedium (M1) angeordnet ist, sodass:

   a. die Vorderseite (20) des zweiten Verstärkermediums (M2) parallel zu der Vorderseite (20) des ersten Verstärkermediums (M1) ist, und

   b. die Rückseite (22) des zweiten Verstärkermediums (M2) parallel zu der Rückseite (22) des ersten Verstärkermediums (M1) ist.

4. Verstärkervorrichtung (10) nach einem der Ansprüche 1 bis 3, wobei der Strahl ($F_{R2}$) an dem Ausgang des zweiten Verstärkermediums (M2) einen erweiterten Durchmesser ($\Phi + \Delta\Phi$) in Bezug auf den Durchmesser ($\Phi$) des einfallenden Strahls ($F_I$) aufweist, die Verstärkervorrichtung (10) eine optische Kompensationsanordnung (30) umfasst, die geeignet ist, um die Erweiterung ($\Delta\Phi$) des Strahls ($F_{R2}$) an dem Ausgang des zweiten Verstärkungsmediums (M2) zu kompensieren, sodass der Strahl ($F_S$) an dem Ausgang der Verstärkervorrichtung (10) einen Durchmesser aufweist, der im Wesentlichen gleich wie der Durchmesser ($\Phi$) des einfallenden Strahls ($F_I$) ist.

5. Verstärkervorrichtung (10) nach Anspruch 4, wobei: die optische Kompensationsanordnung (30) Folgendes umfasst:

   a. ein festes drittes Verstärkermedium (M3), das einen dritten Brechungsindex (n3) aufweist, wobei das dritte Verstärkermedium (M3) mindestens zwei ebene Flächen aufweist, darunter eine Vorderseite (20), die geeignet ist, um den Strahl ($F_{R2}$) an dem Ausgang des zweiten Verstärkermediums (M2) zu empfangen, und eine reflektierende Rückseite (22), wobei die Vorderseite (20) in Bezug auf die Rückseite (22) um eine dritte Neigung ($\beta_3$) ungleich Null geneigt ist, wobei die Rückseite (22) geeignet ist, um gekühlt zu werden,

   b. ein viertes festes Verstärkermedium (M4), das einen vierten Brechungsindex (n4) aufweist, das vierte Verstärkermedium (M4) mindestens zwei ebene Flächen aufweist, darunter eine Vorderseite (20), die geeignet ist, um den Strahl ($F_{R3}$) zu empfangen, der von der Rückseite (22) reflektiert und von der Vorderseite (20) des dritten Verstärkermediums (M3) gebrochen wird, und eine reflektierende Rückseite (22), wobei die Vorderseite (20) in Bezug auf die Rückseite (22) um eine vierte Neigung ($\beta_4$) ungleich Null geneigt ist, wobei die Rückseite (22) geeignet ist, um gekühlt zu werden, wobei das vierte Verstärkermedium (M4) im Verlauf des Strahls ($F_{R3}$) angeordnet ist, der von der Rückseite (22) reflektiert und von der Vorderseite (20) des dritten Verstärkermediums (M3) gebrochen wird,

   wobei die dritte Neigung ($\beta_3$), die vierte Neigung ($\beta_4$), die Ausrichtung des dritten Verstärkermediums (M3) und die Ausrichtung des vierten Verstärkermediums (M4) derart sind, dass der Ausgangsstrahl ($F_S$) des vierten Verstärkermediums (M4) einen Durchmesser aufweist, der im Wesentlichen gleich wie der Durchmesser ($\Phi$) des einfallenden Strahls ($F_I$) ist, und dass die Teilstrahlen jeder Wellenlänge, die den Ausgangsstrahl ($F_S$) bilden, an dem Ausgang des vierten Verstärkermediums (M4) parallel zueinander sind.

6. Verstärkervorrichtung (10) nach Anspruch 5, wobei die Vorderseite (20) des dritten Verstärkermediums (M3) senkrecht zu einer Achse Oz ist, wobei die dritte Neigung ($\beta_3$) einen Winkel $\beta_3$' auf einer Ebene xOz und $\beta_3$'' auf einer Ebene yOz bildet, wobei die dritte Neigung ($\beta_3$) einen Winkel $\beta_3$' auf einer Ebene xOz und $\beta_3$'' auf einer Ebene yOz bildet, wobei die folgende Bedingung erfüllt ist:

$$\beta_3{}' = \frac{((n_4-1).\beta_4{}')}{n_3-1} \text{ et } \beta_3{}'' = \frac{((n_4-1).\beta_4{}'')}{n_3-1}.$$

7. Verstärkervorrichtung (10) nach Anspruch 5 oder 6, wobei das dritte Verstärkermedium (M3) in Bezug auf das vierte Verstärkermedium (M4) angeordnet ist, sodass:

   a. die Vorderseite (20) des dritten Verstärkermediums (M3) parallel zu der Vorderseite (20) des vierten Verstärkermediums (M4) ist, und
   b. die Rückseite (22) des dritten Verstärkermediums (M3) parallel zu der Rückseite (22) des vierten Verstärkermediums (M4) ist.

8. Verstärkervorrichtung (10) nach einem der Ansprüche 5 bis 7, wobei das erste Verstärkermedium (M1), das zweite Verstärkermedium (M2), das dritte Verstärkermedium (M3) und das vierte Verstärkermedium (M4) identisch sind.

9. Verstärkervorrichtung (10) nach einem der Ansprüche 5 bis 8, wobei das erste Medium (M1), das zweite Medium (M2), das dritte Medium (M3) und das vierte Medium (M4) eine Verstärkereinheit, die sogenannte Referenz, bilden, wobei der von der Rückseite (22) reflektierte und von der Vorderseite (20) des vierten Mediums (M4) gebrochene Strahl ($F_{R4}$) den Ausgangsstrahl ($F_S$) der Referenzverstärkereinheit bildet, die Verstärkervorrichtung (10) umfassend eine oder mehrere aufeinanderfolgende Verstärkereinheiten, die mit der Referenzverstärkereinheit identisch sind, wobei jede Verstärkereinheit angeordnet ist, um als Eingangsstrahl den Ausgangsstrahl der vorhergehenden Verstärkereinheit zu empfangen.

10. Verstärkervorrichtung (10) nach einem der Ansprüche 4 bis 9, wobei die optische Kompensationsanordnung (30) mindestens einen Spiegel umfasst, der angeordnet ist, sodass der Ausgangsstrahl ($F_S$) der Verstärkervorrichtung (10) dem einfallenden Strahl ($F_I$) überlagert ist.

**Claims**

1. A device (10) for amplifying a multi-wavelength laser beam, the device (10) comprising:

   a. a first solid active laser medium (M1) having a first refractive index (n1), the first active laser medium (M1) having at least two plane faces among a front face (20) suitable for receiving the beam to be amplified, called the incident beam ($F_I$), and a reflective rear face (22), the front face (20) being inclined with respect to the rear face (22) at a first non-zero inclination ($\beta_1$), the rear face (22) being suitable for being cooled, and
   b. a second solid active laser medium (M2) having a second refractive index (n2), the second active laser medium (M2) having at least two plane faces among a front face (20) suitable for receiving the beam ($F_{R1}$) reflected by the rear face (22) and refracted by the front face (20) of the first active laser medium (M1), and a reflective rear face (22), the front face (20) being inclined with respect to the rear face (22) at a second non-zero inclination ($\beta_2$), the rear face (22) being suitable for being cooled, the second active laser medium (M2) being arranged along the path of the beam ($F_{R1}$) reflected by the rear face (22) and refracted by the front face (20) of the first active laser medium (M1), **characterized in that** the first inclination ($\beta_1$), the second inclination ($\beta_2$) and the orientation of the second active laser medium (M2) are such that the sub-beams of each wavelength, forming the output beam ($F_{R2}$) of the second active laser medium (M2), are parallel to each other at the output of the second active laser medium (M2).

2. The amplification device (10) according to claim 1, wherein the front face (20) of the first active laser medium (M1) is perpendicular to an axis Oz, the first inclination ($\beta_1$) forming an angle $\beta_1'$ on a plane xOz and $\beta_1''$ on a plane yOz, the second inclination ($\beta_2$) forming an angle $\beta_2'$ on a plane xOz and $\beta_2''$ on a plane yOz, the following condition being satisfied:

$$\beta_1' = \frac{((n_2-1).\beta_2')}{n_1-1} \text{ and } \beta_1'' = \frac{((n_2-1).\beta_2'')}{n_1-1}.$$

3. The amplification device (10) according to claim 1 or 2, wherein the second active laser medium (M2) is arranged with respect to the first active laser medium (M1) such that:

   a. the front face (20) of the second active laser medium (M2) is parallel to the front face (20) of the first active laser medium (M1), and
   b. the rear face (22) of the second active laser medium (M2) is parallel to the rear face (22) of the first active laser medium (M1).

4. The amplification device (10) according to any one of claims 1 to 3, wherein the beam ($F_{R2}$) at the output of the second active laser medium (M2) has a widened diameter ($\Phi + \Delta\Phi$) compared to the diameter ($\Phi$) of the incident beam ($F_I$), the amplification device (10) comprising an optical compensation assembly (30) suitable for compensating the widening ($\Delta\Phi$) of the beam ($F_{R2}$) at the output of the second active laser medium (M2) so that the beam ($F_S$) at the output of the amplification device (10) has a diameter substantially equal to the diameter ($\Phi$) of the incident beam ($F_I$).

**5.** The amplification device (10) according to claim 4, wherein the optical compensation assembly (30) comprises:

a. a third solid active laser medium (M3) having a third refractive index (n3), the third active laser medium (M3) having at least two plane faces among a front face (20) suitable for receiving the beam ($F_{R2}$) at the output of the second active laser medium (M2) and a reflective rear face (22), the front face (20) being inclined with respect to the rear face (22) at a third non-zero inclination ($\beta_3$), the rear face (22) being suitable for being cooled,

b. a fourth solid active laser medium (M4) having a fourth refractive index (n4), the fourth active laser medium (M4) having at least two plane faces among a front face (20) suitable for receiving the beam ($F_{R3}$) reflected by the rear face (22) and refracted by the front face (20) of the third active laser medium (M3), and a reflective rear face (22), the front face (20) being inclined with respect to the rear face (22) at a fourth non-zero inclination ($\beta_4$), the rear face (22) being suitable for being cooled, the fourth active laser medium (M4) being arranged along the path of the beam ($F_{R3}$) reflected by the rear face (22) and refracted by the front face (20) of the third active laser medium (M3),

the third inclination ($\beta_3$), the fourth inclination ($\beta_4$), the orientation of the third active laser medium (M3) and the orientation of the fourth active laser medium (M4) being such that the output beam ($F_S$) of the fourth active laser medium (M4) has a diameter substantially equal to the diameter ($\Phi$) of the incident beam ($F_I$) and the sub-beams of each wavelength, forming said output beam (Fs), are parallel to each other at the output of the fourth active laser medium (M4).

**6.** The amplification device (10) according to claim 5, wherein the front face (20) of the third active laser medium (M3) is perpendicular to an axis Oz, the third inclination ($\beta_3$) forming an angle $\beta_3$' on a plane xOz and $\beta_3$" on a plane yOz, the third inclination ($\beta_3$) forming an angle $\beta_3$' on a plane xOz and $\beta_3$" on a plane yOz, the following condition being satisfied:

$$\beta_3' = \frac{((n_4-1).\beta_4')}{n_3-1} \text{ and } \beta_3'' = \frac{((n_4-1).\beta_4'')}{n_3-1}.$$

**7.** The amplification device (10) according to claim 5 or 6, wherein the third active laser medium (M3) is arranged with respect to the fourth active laser medium (M4) such that:

a. the front face (20) of the third active laser medium (M3) is parallel to the front face (20) of the fourth active laser medium (M4), and

b. the rear face (22) of the third active laser medium (M3) is parallel to the rear face (22) of the fourth active laser medium (M4).

**8.** The amplification device (10) according to any one of claims 5 to 7, wherein the first active laser medium (M1), the second active laser medium (M2), the third active laser medium (M3) and the fourth active laser medium (M4) are identical.

**9.** The amplification device (10) according to any of one of claims 5 to 8, wherein the first medium (M1), the second medium (M2), the third medium (M3) and the fourth medium (M4) form a so-called reference amplification unit, the beam ($F_{R4}$) reflected by the rear face (22) and refracted by the front face (20) of the fourth medium (M4) forming the output beam ($F_s$) of the reference amplification unit, the amplification device (10) comprising one or a plurality of successive amplification units identical to the reference amplification unit, each amplification unit being arranged for receiving, as an input beam, the output beam of the preceding amplification unit.

**10.** The amplification device (10) according to any one of claims 4 to 9, wherein the compensation optical assembly (30) comprises at least one mirror arranged in such way that the output beam ($F_s$) of the amplification device (10) is superimposed on the incident beam ($F_I$).

FIG.1

EP 4 264 753 B1

FIG.2

## FIG.4

$F_i$

$F_S$

X

O

Y

Z

$2\theta_i$

$\beta'_1$

20

22

$F_{P1}$

$M_2$

$2(\theta_i + \beta'_1(n_1-1))$

22

$n_2$

$F_{R1}$

$n_1$

20

$M_1$

$\beta'_2$

$F_{R2}$

40

30

10

EP 4 264 753 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2915226 B

- EP 2475054 A